# EUROPEAN PATENT SPECIFICATION

(11) **EP 3 448 782 B1**
(45) Date of publication and mention of the grant of the patent: **30.08.2023**
(21) Application number: 17788875.7
(22) Date of filing: 17.03.2017
(51) Int. Cl.: B65D 90/00, B60P 7/13, B63B 25/00, B61D 3/20

(54) **LOCK MECHANISM**
VERRIEGELUNGSMECHANISMUS
MÉCANISME DE VERROUILLAGE

(30) Priority: 28.04.2016 FI 20165366
(43) Date of publication of application: 06.03.2019
(73) Proprietor: MacGregor Finland Oy, 20780 Kaarina (FI)
(72) Inventor: ÖSTBERG, Juhana, FI-20100 Turku (FI)
(74) Representative: Papula Oy
(86) International application number: PCT/FI2017/050183
(87) International publication number: WO 2017/187009

(56) References cited:
- EP-A1- 1 810 938
- EP-A1- 2 851 327
- DE-A1- 19 925 128
- DE-A1-102004 042 435
- DE-U1- 20 100 624
- DE-U1- 29 708 727
- DE-U1- 29 811 460
- NL-C2- 1 019 787
- US-A- 4 047 748
- US-A- 4 564 984
- US-A- 4 856 150
- US-A1- 2008 014 040
- US-A1- 2016 068 338

## Description

The object of the present invention is a lock mechanism of a twistlock or of some other such fitting for fastening a twistlock or other fitting to a counterpart, such as to a corner casting of a container or to a container foundation fixed to a hatch cover of a ship, which twistlock or other fitting comprises a body.

On a cargo ship containers are transported in a hold below hatch covers and also on deck on top of the hatch covers in a number of parallel rows and in a number of tiers one on top of the other. On deck are detachable hatch covers, with which the hold below is closed. The containers above deck are transported on top of the hatch covers. On the deck of the ship there are typically also fixed structures, so-called lashing bridges, on which some of the containers are supported with separate lashing bars.

Publication EP 2851327 discloses Coupling device for coupling hoisting means to a corner fitting of an intermodal freight container, the corner fitting comprising a surface in a plane perpendicular to a first fitting direction, the surface comprising a slot having an elongated shape. The coupling device comprises a shaft extending along a shaft axis and a contact member. The coupling device further comprises a locking member arranged to slide along the shaft and to slide into the slot with an end part, wherein the shaft and the locking member are arranged such that the orientation of the shaft relative to the locking member is secured and wherein the end part has a cross section arranged to preclude rotation of the locking member in the slot around the shaft axis. Publication US 4047748 discloses a chassis lock to secure a container body to a trailer chassis including a bolt comprising upper and lower telescoping sections, the upper section having a head member received in a cavity in the container body and shaped so that rotating the head bolt locks the body to the chassis. The head member is rotated through the lower portion which is vertically displaceable and lockable in two rotatably different positions by a plate welded thereto that locks into a slot in the chassis in those two positions.

The object of the invention is thus a lock mechanism relating to the operation of twistlocks intended for locking containers to each other, by means of which lock mechanism a twistlock is fastened to the corner casting of a container or alternatively e.g. to a support, a so-called container foundation, on a hatch cover.

At issue in the invention is the "first" fastening of the twistlock, i.e. the phase in which a twistlock is connected e.g. to the corner casting of the bottom corner of the container. After this, when the self-same container is lifted on top of another container, the twistlock in question locks to the corner casting of the top corner of the lower container. This latter locking event is not therefore at issue with respect to the present invention and is not therefore described in any more detail herein.

A twistlock in which this invention can be utilized can, in its basic function, be manual, semi-automatic or fully automatic. The invention can also be utilized e.g. for fastening a guide cone (not the actual twistlock) to be installed in the corner of a container.

Spring-loaded locking means, which are operated manually by means of mechanical levers or cables, have been used in twistlocks. Also spring-loaded slides moving linearly are in use.

Typically by pulling the lever or cable the locking means twists or retracts in relation to the body of the twistlock in such a way that the twistlock can be installed into the corner casting of the container or detached from it. By releasing the lever or cable, the locking means returns to its locking position from the effect of the spring.

One typical solution known in the art is presented in US patent 5,758,391. With regard to the state of the art, we refer also to Finnish patent 124229.

Lever-acting or cable-acting locking means are complex and expensive to manufacture. The operation of the locking means is based on a spring, which can become damaged or can jam in use, in which case operation of the twistlock is disturbed. In the worst case locking of a container to another container can fail, which can result in containers falling into the sea. It is also possible that a twistlock installed onto the base of a container detaches and falls out of position when lifting the container if the locking means does not function.

The purpose of the present invention is to achieve a new type of lock mechanism for a twistlock, to which lock mechanism the drawbacks mentioned earlier do not apply. The lock mechanism is characterized by what is defined in the characterization part of the independent claim 1. Preferred embodiments of the lock mechanism according to the invention are defined in the dependent claims.

The invention is thus a lock mechanism, by means of which a twistlock or other fitting is locked into the corner casting of a container or into a corresponding fastening point, e.g. on a hatch cover, and the operation of which lock mechanism is based on a locking means functioning by gravity.

According to one embodiment the object of the invention is a lock mechanism, in which the locking means is shaped in such a way that it locks the twistlock into position also when installed upside down. In other words, the locking of the twistlock functions whether it is installed in the corner casting of a container from below into a hanging attitude or, on the other hand, into a container foundation from above in the opposite attitude or into some other corresponding fastening point.

Some of the advantages of the invention that can be mentioned include:
- An inexpensive and operationally reliable structure.
- A twistlock can be made to be simpler in structure.

In the following, the invention will be described in detail by the aid of some examples of its preferred embodiments with reference to the attached drawings, wherein
Fig. 1 presents a twistlock and the corner casting of a container.
Fig. 2 presents the twistlock lifted inside the corner casting and twisted 45°, in the open position of the locking means.
Fig. 3 presents the twistlock lifted inside the corner casting and twisted 90°, in the open position of the locking means.
Fig. 4 presents the twistlock lifted inside the corner casting and twisted 90°, in the locking position of the locking means.
Fig. 5 presents a twistlock and a container foundation that are separate from one another.
Fig. 6 presents a twistlock installed inside a container foundation and twisted 45°, in the open position of the locking means.
Fig. 7 presents a twistlock installed inside a container foundation and twisted 90°, in the open position of the locking means.
Fig. 8 presents a twistlock installed inside a container foundation and twisted 90°, in the locking position of the locking means.

The main components of a twistlock 1 are a body 2 and a locking means 3. The locking means is able to slide in the vertical direction in relation to the body into the locking position and open position along a guide rail 4 on the body.

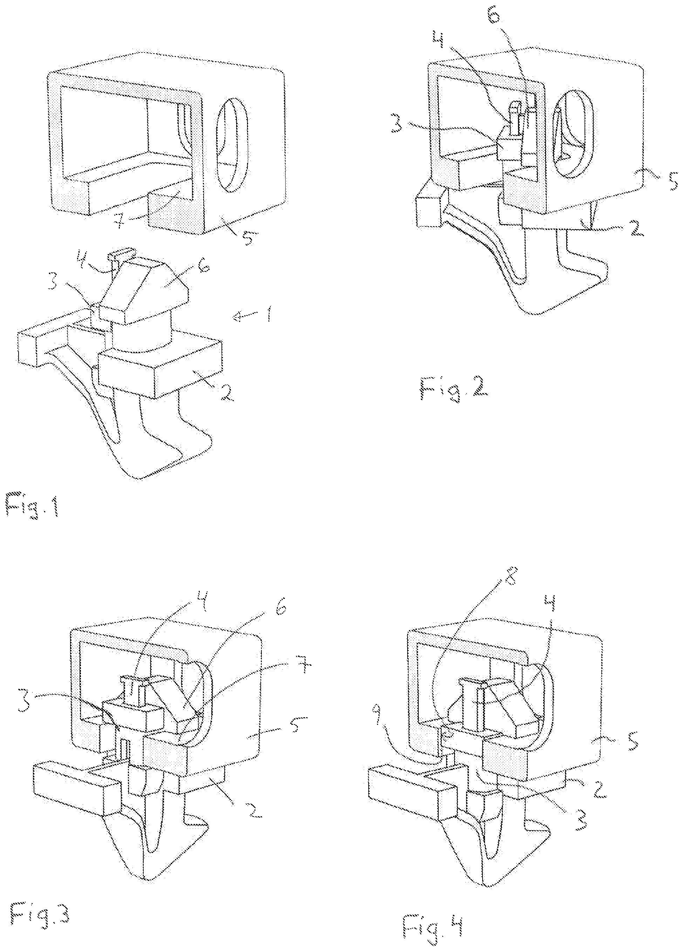

When the twistlock 1 is installed into a counterpart, such as into a corner casting 5 of a container in the manner presented by Figs. 1-4, the locking means 3 is lifted into the open position. In this case the twistlock can be turned 90° in the situation in which the support cone 6 formed on the body of the twistlock is inside the corner casting. As a result of this the support cone rests on the support surface 7 of the corner casting. The twistlock is locked into position by letting the locking means 3 drop by gravity into the locking position, which is presented in Fig. 4.

If the twistlock, e.g. in the vibration of the ship, tries to twist in relation to the corner casting, the edge side 8 of the locking means hits the inside surface 9 of the installation hole that is in the corner casting, and any twisting leading to detachment of the twistlock is simultaneously prevented.

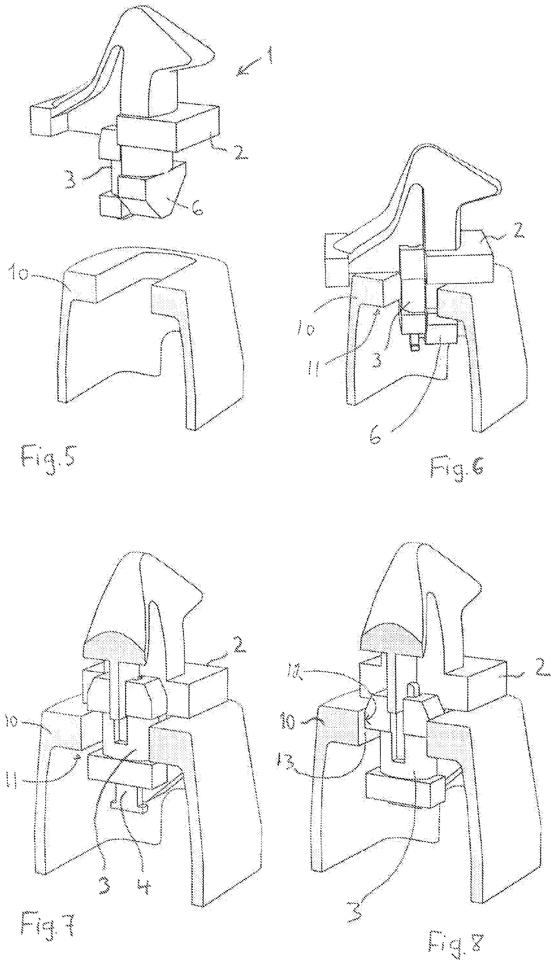

The operation is corresponding in a situation in which a twistlock is installed in another type of counterpart, such as in a container foundation 10 (Figs. 5-8) that is on top of a hatch cover. When the twistlock 1 is installed into the container foundation 10, the locking means 3 is lifted into the open position. In this case the twistlock can be turned 90° in the position in which the support cone 6 formed on the body of the twistlock is inside the container foundation. As a result of this the support cone rests on the support surface 11 of the container foundation support, if a lifting force directed upwards is exerted on the twistlock.

The twistlock is locked into position by letting the locking means 3 drop by gravity into the locking position. The locking position of the twistlock 1 locking means 3 in this position is therefore the opposite to that in the situation presented in Figs. 1-4, in which the twistlock is installed in a corner casting 5 of a container. Furthermore, if the twistlock 1, e.g. in the vibration of the ship, tries to twist in relation to the container foundation 10, the edge side 12 of the locking means hits the inside surface 13 of the installation hole in the container foundation, and any twisting leading to detachment of the twistlock is simultaneously prevented.

In both the aforementioned installation situations, detachment of the twistlock occurs by lifting the locking means 3 into the open position and by turning the twistlock 90°.

The mechanism according to the invention can also be implemented in such a way that the locking position is implemented only in one extreme position of the locking means 3, e.g. in a situation in which the installation method of the twistlock is limited to one position (no possibility of upside down installation of the twistlock).

The drawings present a version of the locking means 3 in which twisting in the locking position is prevented in both directions. Alternatively the structure could be such that the locking means would prevent twisting in one direction and e.g. the shape of the body of the twistlock 1 would prevent twisting in the opposite direction.

Use of the lock mechanism is not restricted to the twistlock presented in the figures. The lock mechanism can also be used for locking other fittings to be connected to a corner casting of a container or container foundation.

The lowermost container of each container stack is locked onto the hatch cover with twistlocks and containers that are one on top of the other are further locked to each other with twistlocks.

It is obvious to the person skilled in the art that the invention is not limited to the embodiments described above, but that it can be varied within the scope of the claims presented below.

The characteristic features possibly presented in the description in conjunction with other characteristic features can also, if necessary, be used separately to each other.

## Claims

1. A twistlock (1) or other fitting comprising a lock mechanism for fastening to a counterpart (5, 10), being either a corner casting (5) of a container or +e-a container foundation (10) fixed to a hatch cover of a ship, which twistlock (1) or other fitting comprises a body (2), which lock mechanism comprises a locking part (3), which can be moved in relation to the body (2) between a locking position, in which twisting of the twistlock (1) or other fitting in the counterpart (5, 10) is prevented, and an open position, in which twisting of the twistlock (1) or other fitting in the counterpart (5, 10) is possible, wherein the locking part (3) is arranged to move along a guide rail (4) that is on the body (2) in a fixed manner, and in that the locking part (3) can be moved from the locking position into the open position by lifting the locking part, and in that the opposite movement from the open position downwards into the locking position occurs by gravity, **characterized in that** the locking part (3) is formed in such a way that a twistlock (1) or other fitting can be fastened either from above in a hanging manner into the corner casting (5) of a container or upside down onto a container foundation (10) or corresponding fixing point of a hatch cover, and **in that** the locking part (3) moves by gravity into its locking position in both installation methods.

2. Lock mechanism according to claim 1, **characterized in that** the locking part (3) is arranged to hit in its locking position the inside surface (9, 13) of the installation hole of the counterpart (5, 10) in such a way that twisting in relation to the counterpart is prevented.

## Patentansprüche

1. Eine Drehverriegelung (1) oder eine andere Anbringungseinrichtung, umfassend einen Verriegelungsmechanismus zur Befestigung an einem Gegenstück (5, 10), das entweder ein Eckbeschlag (5) eines Behälters oder eine Behälterbasis (10) ist, die an einem Lukendeckel eines Schiffes befestigt sind, wobei die Drehverriegelung (1) oder die andere Anbringung einen Körper (2) umfasst, wobei der Verriegelungsmechanismus ein Verriegelungsteil (3) umfasst, das in Bezug auf den Körper (2) zwischen einer Verriegelungsposition, in der ein Drehen der Drehverriegelung (1) oder einer anderen Anbringung in dem Gegenstück (5, 10) verhindert wird, und einer offenen Position, in der ein Drehen der Drehverriegelung (1) oder einer anderen Anbringung in dem Gegenstück (5, 10) möglich ist, bewegt werden kann, wobei das Verriegelungsteil (3) so angeordnet ist, dass es sich entlang einer Führungsschiene (4) bewegt, die sich auf dem Körper (2) in einer fixierten Weise befindet, und dass das Verriegelungsteil (3) durch Anheben des Verriegelungsteils von der Verriegelungsposition in die offene Position bewegt werden kann und dass die entgegengesetzte Bewegung von der offenen Position nach unten in die Verriegelungsposition durch Schwerkraft erfolgt, **dadurch gekennzeichnet, dass** das Verriegelungsteil (3) derart ausgebildet ist, dass eine Drehverriegelung (1) oder eine andere Anbringung entweder von oben hängend in den Eckbeschlag (5) eines Behälters oder umgedreht auf einer Behälterbasis (10) oder einem entsprechenden Fixierungspunkt eines Lukendeckels befestigt werden kann, und dass das Verriegelungsteil (3) bei beiden Installationsarten durch Schwerkraft in seine Verriegelungsposition bewegt wird.

2. Verriegelungsmechanismus gemäß Anspruch 1, **dadurch gekennzeichnet, dass** das Verriegelungsteil (3) so angeordnet ist, dass es in seiner Verriegelungsposition die Innenfläche (9, 13) des Installationslochs des Gegenstücks (5, 10) so trifft, dass eine Drehung gegenüber dem Gegenstück verhindert wird.

## Revendications

1. Verrou tournant (1) ou un autre accessoire comprenant un mécanisme de verrouillage destiné à être fixé à un élément associé (5, 10), tel qu'un moulage de coin (5) d'un conteneur ou d'un socle de conteneur (10) fixé à un capot d'écoutille d'un navire, lequel verrou tournant (1), ou autre accessoire comprend un corps (2), lequel mécanisme de verrouillage comprend une partie de verrouillage (3) qui peut être déplacée par rapport au corps (2) entre une position de verrouillage dans laquelle le verrou tournant (1) ou l'autre accessoire ne peut pas tourner dans l'élément associé (5, 10), et une position ouverte dans laquelle le verrou tournant (1) ou l'autre accessoire peut tourner dans l'élément associé (5, 10), dans lequel la partie de verrouillage (3) est agencée pour se déplacer le long d'un rail de guidage (4) qui est sur le corps (2) d'une manière fixe, et en ce que la partie de verrouillage (3) peut être déplacée depuis la position de verrouillage jusque dans la position ouverte en soulevant la partie de verrouillage, et en ce que le déplacement opposé depuis la position ouverte vers le bas jusque dans la position de verrouillage se produit par gravité, **caractérisé en ce que** la partie de verrouillage (3) est conçue de telle sorte qu'un verrou tournant (1) ou un autre accessoire peut être fixé soit par le haut de manière suspendue dans le moulage de coin (5) d'un conteneur, soit à l'envers sur un socle de conteneur (10) ou un point de fixation correspondant d'un capot d'écoutille, et **en ce que** la partie de verrouillage (3) se déplace par gravité jusque dans sa position de verrouillage dans les deux modes de montage.

2. Mécanisme de verrouillage selon la revendication 1, **caractérisé en ce que** la partie de verrouillage (3) est agencée pour heurter, dans sa position de verrouillage, la surface intérieure (9, 13) du trou d'installation de l'élément associé (5, 10) sans ainsi pouvoir tourner par rapport à l'élément associé.
